(19) Europäisches Patentamt
European Patent Office
Office européen des brevets

(11) EP 0 571 826 B1

(12) **EUROPÄISCHE PATENTSCHRIFT**

(45) Veröffentlichungstag und Bekanntmachung des Hinweises auf die Patenterteilung:
**26.02.1997 Patentblatt 1997/09**

(51) Int Cl.[6]: **C08F 10/02**, C08F 2/34, C08F 4/656

(21) Anmeldenummer: **93107790.3**

(22) Anmeldetag: **13.05.1993**

(54) **Kontinuierliches Gasphasenwirbelschichtverfahren zur Herstellung von Ethylenhomopolymerisaten und -copolymerisaten**

Continuous process for the production of ethylene homopolymers and copolymers in gas fluidized bed

Procédé continu de préparation d'homopolymères et de copolymères de l'éthylène en lit fluidisé et en phase gazeuse

(84) Benannte Vertragsstaaten:
**BE DE ES FR GB IT NL**

(30) Priorität: **23.05.1992 DE 4217171**

(43) Veröffentlichungstag der Anmeldung:
**01.12.1993 Patentblatt 1993/48**

(73) Patentinhaber: **BASF Aktiengesellschaft**
**67063 Ludwigshafen (DE)**

(72) Erfinder:
- **Schauss, Eckard, Dr.**
  **W-6711 Heuchelheim (DE)**
- **Hennenberger, Peter, Dr.**
  **W-6713 Freinsheim (DE)**
- **Bullack, Horst**
  **W-5047 Wesseling (DE)**
- **Schweier, Guenther, Dr.**
  **W-6701 Friedelsheim (DE)**
- **Knauer, Benno**
  **W-6700 Ludwigshafen (DE)**

(56) Entgegenhaltungen:
**EP-A- 0 004 645** **EP-A- 0 341 539**
**US-A- 5 106 926**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 571 826 B1

Printed by Jouve, 75001 PARIS (FR)

## Beschreibung

Die vorliegende Erfindung betrifft ein neues kontinuierliches Gasphasenwirbelschichtverfahren zur Herstellung von Ethylenhomopolymerisaten und -copolymerisaten einer Dichte d von 0,87 bis 0,97 g/cm$^3$, bei welchem man Ethylen oder Gemische aus Ethylen und $C_3$- bis $C_8$-α-Monoolefinen in der Polymerisationszone eines Gasphasenwirbelschichtreaktors bei Drücken von 1 bis 100 bar und Temperaturen $T_R$ von 30 bis 125°C in der Gasphase in einem durchmischten Schüttgutbett aus kleinteiligem Polymerisat in Anwesenheit eines titan- und magnesiumhaltigen Ziegler-Katalysators (co)polymerisiert, die hierbei entstehende Polymerisationswärme durch Kühlung des im Kreis geführten Reaktorgases abführt und das resultierende (Co)Polymerisat aus dem Gasphasenwirbelschichtreaktor ausschleust.

Sieht man von der erfindungsgemäßen Verbesserung ab, ist ein solches kontinuierliches Gasphasenwirbelschichtverfahren aus der EP-A-0 341 539, der EP-A-0 004 645, der EP-A-0 089 691 oder der EP-A-0 120 503 bekannt.

Mit Hilfe des aus der EP-A-0 341 539 bekannten Verfahrens werden in der Gasphase bei einer Temperatur $T_R$ von 75°C in vergleichsweise hoher Ausbeute Ethylen-Buten-Copolymerisate einer Dichte d von 0,919 bis 0,922 g/cm$^3$ erhalten, welche einen vergleichsweise niedrigen Feingutanteil ohne Feinstgutanteil aufweisen, welche indes eine verhältnismäßig niedrige Schüttdichte haben.

Mit Hilfe des in der EP-A-0 004 645 beschriebenen Gasphasenwirbelschichtverfahrens werden Ethylen-Buten-Copolymerisate einer Dichte d von 0,9416 bis 0,9607 g/cm$^3$ bei Temperaturen $T_R$ von 93,8 bis 110°C und solche einer Dichte d von 0,919 bis 0,931 g/cm$^3$ bei Temperaturen $T_R$ von 85 bis 90°C hergestellt.

Nach dem aus der EP-A-0 120 503 bekannten Gasphasenwirbelschichtverfahren werden bei Temperaturen $T_R$ von 35 bis 57°C Ethylen-Propylen- oder Ethylen-Buten-Copolymerisate einer Dichte d von 0,885 bis 0,902 g/cm$^3$ erhalten.

Das aus der EP-A-0 089 691 bekannte Gasphasenwirbelschicht verfahren liefert bei Temperaturen $T_R$ von 83,7 bis 88°C Ethylen-α-Monoolefin-Copolymerisate einer Dichte d von 0,918 g/cm$^3$.

Diese bekannten Gasphasenwirbelschichtverfahren weisen vor allem bei der Herstellung von Ethylencopolymerisaten niedriger Dichte Nachteile auf. Da bei der Herstellung dieser Ethylencopolymerisate vergleichsweise niedrige Temperaturen $T_R$ angewandt werden müssen, adsorbieren die kleinteiligen Polymerisate des Schüttgutbetts im Gasphasenwirbelschichtreaktor zwangsweise verhältnismäßig große Mengen an flüssigen Comonomeren oder inerten Zusatzstoffen. Dieser hohe Anteil an adsorbierten Flüssigkeiten führt bei den bekannten Verfahren schon bei relativ niedrigen Temperaturen $T_R$ zur Bildung von Wandbelägen und Brocken innerhalb des Gasphasenwirbelschichtreaktors, weswegen eine Erhöhung der Temperatur $T_R$ zu Zwecken der Steigerung der Raum-Zeit-Ausbeute von der Fachwelt nicht in Betracht gezogen wird. Hierzu sei auf die Veröffentlichungen SRI International, Process Economics Report No. 179, "Polyolefins by Gasphase Processes" und SRI International, "Polyolefins Through The 80's - the Continuing Evolution", Polyolefin Technology Update, Vol. TU II, Figure TU II.4.6, verwiesen.

Der Bildung von Wandbelägen und Brocken kann bis zu einem gewissen Umfang dadurch entgegengewirkt werden, daß man die Comonomeren mit einer großen Menge an Inertgas verdünnt (vgl. die EP-A-0 120 503). Hierdurch wird aber die Raum-Zeit-Ausbeute drastisch erniedrigt.

Aufgabe der vorliegenden Erfindung ist es, ein neues kontinuierliches Gasphasenwirbelschichtverfahren zur Herstellung von Ethylenhomopolymerisaten und -copolymerisaten einer Dichte d von 0,87 bis 0,97 g/cm$^3$ zu finden, welches die Nachteile des Standes der Technik nicht mehr länger aufweist und die Herstellung von (Co)Polymerisaten einer vorgewählten Dichte d mit hoher Schüttdichte und in hoher Ausbeute ohne Wandbelags- und Brockenbildung gestattet.

Diese Aufgabe konnte wirkungsvoll und elegant dadurch gelöst werden, daß man bei einem an sich bekannten kontinuierlichen Gasphasenwirbelschichtverfahren die Temperatur $T_R$ in der Polymerisationszone in Abhängigkeit von der Dichte d des herzustellenden (Co)Polymerisats innerhalb eines näher definierten Temperaturbereichs einstellt. Im Hinblick auf den Stand der Technik war es überraschend, daß dieser Temperaturbereich für alle Dichten d oberhalb der Temperaturen $T_R$ liegt, welche bei den bislang bekannten kontinuierlichen Gasphasenwirbelschichtverfahren angewandt worden sind.

Bei dem Gegenstand des vorliegenden Verfahrens handelt es sich demnach um ein kontinuierliches Gasphasenwirbelschichtverfahren zur Herstellung von Ethylenhomopolymerisaten und -copolymerisaten einer Dichte d von 0,87 bis 0,97 g/cm$^3$, bei welchem man Ethylen oder Gemische aus Ethylen und $C_3$- bis $C_8$-α-Monoolefinen in der Polymerisationszone eines Gasphasenwirbelschichtreaktors bei Drücken von 1 bis 100 bar und Temperaturen $T_R$ von 30 bis 125°C und einem Inertgasanteil von 25-55 Vol.-% in der Gasphase in einem durchmischten Schüttgutbett aus kleinteiligem Polymerisat in Anwesenheit eines titan- und magnesiumhaltigen Ziegler-Katalysators (co)polymerisiert, die hierbei entstehende Polymerisationswärme durch Kühlung des im Kreis geführten Reaktorgases abführt und das resultierende (Co)Polymerisat aus dem Gasphasenwirbelschichtreaktor ausschleust, dadurch gekennzeichnet, daß man zur Herstellung eines (Co)Polymerisats einer vorgewählten Dichte d die (Co)Polymerisation bei einer Temperatur $T_R$ durchführt, welche in einem Bereich liegt, der von einer oberen Umhüllenden der Gleichung I

$$T_{RH} = 170 + \frac{6d'}{0,84 - d'} \quad (I)$$

und einer unteren Umhüllenden der Gleichung II

$$T_{RN} = 173 + \frac{7,3d'}{0,837 - d'} \quad (II),$$

worin die Variablen die folgende Bedeutung haben:

$T_{RH}$ höchste Reaktionstemperatur in °C;
$T_{RN}$ niedrigste Reaktionstemperatur in °C;
d' Zahlenwert der Dichte d des herzustellenden (Co)Polymerisats;

begrenzt wird.

Im folgenden wird dieses neue kontinuierliche Gasphasenwirbelschichtverfahren zur Herstellung von Ethylenhomopolymerisaten und -copolymerisaten einer Dichte d von 0,87 bis 0,97 g/cm$^3$ der Kürze halber als "erfindungsgemäßes Verfahren" bezeichnet.

Für das erfindungsgemäße Verfahren ist es wesentlich, daß man zur Herstellung eines (Co)Polymerisats einer vorgewählten Dichte d die (Co)Polymerisation bei einer Temperatur $T_R$ durchführt, welche in einem Bereich liegt, der von der oberen Umhüllenden der vorstehend aufgeführten Gleichung I und der unteren Umhüllenden der vorstehend aufgeführten Gleichung II begrenzt wird. Dies bedeutet, daß Temperaturen $T_R$, welche außerhalb dieses Bereichs liegen, bei dem erfindungsgemäßen Verfahren nicht angewandt werden dürfen, weil sich ansonsten der Verfahrenserfolg nicht einstellt. Mit anderen Worten, die Gleichungen I und II geben die höchste Reaktionstemperatur $T_{RH}$ und die niedrigste Reaktionstemperatur $T_{RN}$ an, bei denen ein (Co)Polymerisat einer bestimmten gewünschten Dichte d mit Hilfe des erfindungsgemäßen Verfahrens gerade noch hergestellt werden kann. So ergeben sich beispielsweise für die Herstellung von (Co)Polymerisaten einer Dichte d von 0,88, 0,89, 0,90, 0,91, 0,92, 0,93, 0,94, 0,95, 0,96 und 0,97 g/cm$^3$, die in der Tabelle 1 aufgeführten höchsten und niedrigsten Reaktionstemperaturen $T_{RH}$ und $T_{RN}$.

Tabelle 1

| Höchste und niedrigste Reaktionstemperaturen $T_{RH}$ und $T_{RN}$ für die Herstellung von (Co)Polymerisaten einer bestimmten Dichte d | | |
|---|---|---|
| Dichte d | Höchste Reaktionstemperatur $T_{RH}$ | Niedrigste Reaktionstemperatur $T_{RN}$ |
| (g/cm$^3$) | (°C) | (°C) |
| 0,88 | 38,0 | 23,6 |
| 0,89 | 63,2 | 50,4 |
| 0,90 | 80,0 | 68,7 |
| 0,91 | 92,0 | 82,0 |
| 0,92 | 101,0 | 92,1 |
| 0,93 | 108,0 | 100,0 |
| 0,94 | 113,6 | 106,4 |
| 0,95 | 118,2 | 111,6 |
| 0,96 | 122,0 | 116,0 |
| 0,97 | 125,2 | 119,8 |

Für das erfindungsgemäße Verfahren ist es außerdem wesentlich, daß die (Co)Polymerisation in der Polymerisationszone bzw. dem durchmischten Schüttgutbett aus kleinteiligem Polymerisat in Anwesenheit eines titan- und magnesiumhaltigen Ziegler-Katalysators durchgeführt wird. Hierfür kommen im Grunde alle üblichen und bekannten, hochaktiven titan- und magnesiumhaltigen Ziegler-Katalysatoren in Betracht, wie sie beispielsweise in der EP-A-0 004 645, der EP-A-0 021 605 oder der EP-A-0 043 220 beschrieben werden. Für das erfindungsgemäße Verfahren ist es indes von besonderem Vorteil, einen Ziegler-Katalysator mit einer titan- und magnesiumhaltigen Aktivkomponente zu verwenden, bei deren Herstellung ein Polysiloxan angewandt worden ist. Ganz besonders gut geeignete Ziegler-Katalysatoren enthalten eine titan- und magnesiumhaltige Aktivkomponente, welche aus einer titanhaltigen Verbindung und einer magnesiumhaltigen Verbindung, einem Polysiloxan, einem feinteiligen inerten Träger, einer Aluminiumalkylverbindung und einer Lewis-Base herstellbar ist.

Für die Herstellung dieses ganz besonders bevorzugt angewandten Ziegler-Katalysators kann man eine mit Alkohol als Komplexbildner umgesetzte titan- und magnesiumhaltige Verbindung in Gegenwart des Polysiloxans aus homogener Lösung auf den feinteiligen inerten Träger durch Eindampfen des Lösungsmittels aufziehen. Anschließend kann man die daraus resultierende Katalysatorvorstufe durch Behandeln mit der Aluminiumalkylverbindung und der Lewisbase in einer inerten Kohlenwasserstofflösung voraktivieren.

Nach bevorzugter Verfahrensweise wird beim Eindampfen des Lösungsmittels unter Inertgas bzw. bei reduziertem Druck bis zu 50 Vol.-% des Lösungsmittels im Temperaturbereich von 60 bis 80°C und der Rest bis zu einem Endvakuum von 5 mbar bei einer Temperatur von maximal 50°C entfernt. Die Verfahrensweise ist abhängig vom Siedepunkt des Lösungsmittels; liegt dieser innerhalb der angegebenen Grenzen wird unter Inertgas gearbeitet. Liegt der Siedepunkt jedoch oberhalb 80°C ist verminderter Druck anzuwenden.

Bevorzugt ist außerdem ein Herstellverfahren, bei dem das Lösungsmittel ein gesättigter Oxakohlenwasserstoff wie Di-n-butylether oder Tetrahydrofuran ist. Hierbei weist ein Herstellverfahren, bei dem man als das Träger Siliciumdioxid einer mittleren spezifischen Oberfläche von 200 bis 400 $m^2/g$, eines mittleren Korndurchmessers von 5 bis 200 µm und eines mittleren spezifischen Porenvolumens von 1,5 bis 2,0 $cm^3/g$ verwendet, weitere Vorteile auf. Zusätzliche Vorteile ergeben sich durch ein Herstellverfahren, bei dem die Lewisbase ein Silan der Formel $R^1_mSi(OR^2)_{4-m}$, worin der Index m = 0, 1, 2, 3 und 4 und die Variablen $R^1$ und $R^2$ = ein $C_1$- bis $C_{12}$-Kohlenwasserstoffrest, oder ein dimeres Siloxan der allgemeinen Formel $R^1_nR^2_{3-n}Si\text{-}O\text{-}SiR^1_nR^2_{3-n}$ ist, worin der Index n = 0, 1, 2 und 3 und die Variablen $R^1$ und $R^2$ = $C_1$- bis $C_{12}$-Kohlenwasserstoffrest.

Bevorzugt ist das Verfahren, bei dem das Polysiloxan die allgemeine Formel

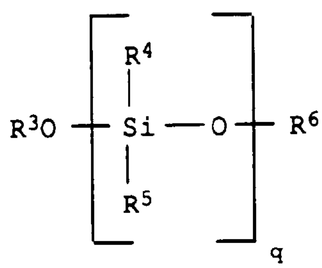

aufweist, worin die Variablen $R^3$, $R^4$, $R^5$ und $R^6$ gleich oder verschieden voneinander sein können und mindestens einen Methyl- oder mindestens einen Phenylrest darstellen und worin der Index q gleich einer ganzen Zahl zwischen 10 und 3000 ist.

Für die Herstellung der Aktivkomponenten werden ganz besonders bevorzugt eine Titan enthaltende Verbindung der allgemeinen Formel $TiCl_3 \cdot rAlCl_3$, worin r für eine Zahl im Bereich von 0 bis 0,5, vorzugsweise 0,2 bis 0,4 und insbesondere 0,31 bis 0,35 steht, sowie eine magnesiumhaltige Verbindung der allgemeinen Formel $MgX_2$, worin X für Cl, Br oder Iod steht, verwendet. Als bevorzugte Magnesiumverbindung wird wasserfreies $MgCl_2$ angewendet.

Die zuvor genannten Verbindungen werden mit Alkoholen der allgemeinen Formel R-OH, worin die Variable R für einen aliphatischen $C_2$- bis $C_{14}$-Kohlenwasserstoffrest steht, nach üblichen Methoden komplexiert (z.B. nach D.C. Bradley, M.L. Mehta, Canadian Journal of Chemistry, 40, [1962], Seiten 1710 bis 1713). Die Komplexe können entweder in situ, etwa aus $MgCl_2$ und 2-Ethylhexanol in Tetrahydrofuran als Lösungsmittel, oder in isolierter Form, z.B. als $TiCl_3 \cdot 1/3\ AlCl_3 \cdot 5{,}33$ i-Propanol, angewandt werden.

Die in einem inerten Kohlenwasserstoff gelöste Aluminiumverbindung hat vorteilhafterweise die Formel $Al(R^7)(R^8)Y$, worin die Variablen $R^7$ und $R^8$ für einen gesättigten $C_1$- bis $C_{12}$-Kohlenwasserstoffrest oder Chlor, insbesondere aber für eine $C_2$- bis $C_8$-Alkylgruppe stehen. Die Variable Y bedeutet Chlor, Wasserstoff oder eine Alkoxygruppe.

Diese Aktivkomponenten von Ziegler-Katalysatoren und die Verfahren zu ihrer Herstellung sind aus der EP-A-0 341 539 bekannt.

Das erfindungsgemäße Verfahren wird in einem Gasphasenwirbelschichtreaktor durchgeführt, wie er beispielsweise in der EP-A-0 004 645, der EP-A-0 089 691, der EP-A-0 120 503 oder der EP-A-0 241 947 im Detail beschrieben wird. Im allgemeinen handelt es sich bei dem Gasphasenwirbelschichtreaktor um ein mehr oder weniger langes Rohr, welches von im Kreis geführtem Reaktorgas durchströmt wird. Im allgemeinen wird das im Kreis geführte Reaktorgas dem unteren Ende des Gasphasenwirbelschichtreaktors zugeführt und dessen oberen Ende wieder entnommen. Üblicherweise handelt es sich bei dem im Kreis geführten Reaktorgas um eine Mischung aus Ethylen, einem Molekulargewichtsregler wie Wasserstoff und Inertgasen wie Stickstoff und/oder gesättigte Kohlenwasserstoffe wie Ethan, Butan oder Hexan. Außerdem kann das Reaktorgas $C_3$- bis $C_8$-$\alpha$-Monoolefine wie Propylen, But-1-en, Pent-1-en, Hex-1-en, Hept-1-en und Oct-1-en enthalten. Die Geschwindigkeit des Reaktorgases, gemessen als Leerrohrgeschwindigkeit, muß ausreichend hoch sein, um zum einen das im Rohr befindliche, als Polymerisationszone dienende durchmischte Schüttgutbett aus kleinteiligem Polymerisat aufzuwirbeln und zum anderen die Polymerisationswärme wirksam abzuführen.

Zur Einstellung gleichbleibender Reaktionsbedingungen können die Bestandteile des Reaktorgases dem Gasphasenwirbelschichtreaktor direkt oder über das im Kreis geführte Reaktorgas zugeführt werden. Im allgemeinen erweist es sich als vorteilhaft, die vorstehend genannten $C_3$- bis $C_8$-$\alpha$-Monoolefine direkt in den Gasphasenwirbelschichtreaktor einzuleiten. Des weiteren ist es für das erfindungsgemäße Verfahren von Vorteil, den titan- und magnesiumhaltigen Ziegler-Katalysator sowie die gegebenenfalls mitverwendeten Cokatalysatoren direkt in das durchmischte Schüttgutbett aus kleinteiligem Polymerisat einzubringen. Hierbei erweist es sich als besonders vorteilhaft, den Ziegler-Katalysator gemäß dem in der DE-A-35 44 915 beschriebenen Verfahren portionsweise mit Stickstoff oder Argon direkt in das Schüttgutbett zu zerstäuben. Die Cokatalysatoren können dann mit Ethylen in das Schüttgutbett eingedüst werden.

Um das Mitreißen von kleinteiligem Polymerisat aus der Polymerisationszone in das Kreisgassystem zu vermeiden, weist der für das erfindungsgemäße Verfahren verwendete Gasphasenwirbelschichtreaktor an seinem oberen Ende eine Beruhigungszone mit erweitertem Durchmesser auf, welche die Kreisgasgeschwindigkeit reduziert. Im allgemeinen empfiehlt es sich, die Kreisgasgeschwindigkeit in dieser Beruhigungszone auf ein Drittel bis ein Sechstel der Kreisgasgeschwindigkeit in der Polymerisationszone zu verringern.

Das im Kreis geführte Reaktorgas wird nach seinem Austritt aus dem Gasphasenwirbelschichtreaktor einem Kreisgasverdichter und einem Kreisgaskühler zugeführt. Hiernach wird das gekühlte und verdichtete Kreisgas über einen üblichen und bekannten Gasverteilerboden wieder in das durchmischte Schüttgutbett des Gasphasenwirbelschichtreaktors eingeleitet. Hierdurch resultiert eine weitestgehend homogene Gasphasenverteilung, welche eine gute Durchmischung des Schüttgutbetts gewährleistet.

Auch bei dem erfindungsgemäßen Verfahren bestimmen die Verhältnisse der Ausgangsprodukte, insbesondere aber das Verhältnis von Ethylen zu $C_3$- bis $C_8$-$\alpha$-Monolefinen die Dichte d der resultierenden Copolymerisate.

Des weiteren bestimmt die Menge des zudosierten Ziegler-Katalysators den Produktausstoß des Gasphasenwirbelschichtreaktors. Dessen Kapazität wird bekanntermaßen durch die Kühlkapazität des im Kreis geführten Reaktorgases begrenzt. Diese Kühlkapazität richtet sich zum einen nach dem Druck, unter dem das Reaktorgas steht bzw. bei dem die (Co)Polymerisation durchgeführt wird. Hier empfiehlt es sich im allgemeinen bei Drücken von 1 bis 100, vorzugsweise 20 bis 90 und insbesondere 30 bis 70 bar zu arbeiten. Außerdem richtet sich die Kühlkapazität nach der Temperatur $T_R$, bei welcher die (Co)Polymerisation in dem durchmischten Schüttgutbett aus kleinteiligem Polymerisat durchgeführt wird. Für das erfindungsgemäße Verfahren ist es vorteilhaft, bei Temperaturen $T_R$ von 30 bis 125°C zu arbeiten.

Das bei dem erfindungsgemäßen Verfahren gebildete (Co)Polymerisat kann in üblicher und bekannter Weise aus dem Gasphasenwirbelschichtreaktor ausgeschleust werden. Aufgrund der besonderen Vorteile des erfindungsgemäßen Verfahrens und der hiermit hergestellten Produkte kann dieses Ausschleusen durch einfaches Öffnen eines Kugelhahns in einer Austragsleitung zu einem Entspannungsbehälter erfolgen. Hierbei wird der Druck im Entspannungsbehälter möglichst niedrig gehalten, um auch größere Förderstrecken verwenden zu können und um die (Co)Polymerisate bereits beim Ausschleusen von adsorbierten Flüssigkeiten wie Restmonomeren zu befreien. Im Entspannungsbehälter können dann die (Co)Polymerisate beispielsweise durch Spülen mit Ethylen weiter gereinigt werden. Die hierbei desorbierten Restmonomere und das zur Spülung zugeführte Ethylen können einer üblichen und bekannten Kondensationsstufe zugeführt werden, worin sie - vorteilhafterweise bei Normaldruck und tieferen Temperaturen - wieder voneinander getrennt werden. Im allgemeinen werden die flüssigen Restmonomere dem Schüttgutbett wieder direkt zugeführt. Das zur Spülung verwendete Ethylen und andere gegebenenfalls noch vorhandene Gase können dagegen in einem üblichen und bekannten Rückgasverdichter verdichtet und dem im Kreis geführten Reaktorgas wieder hinzugegeben werden.

Die in dem Entspannungsbehälter befindlichen (Co)Polymerisate können in einen Desodorier- oder Desaktivierbehälter weitergefördert werden, worin sie einer üblichen und bekannten Stickstoff und/oder Wasserdampfbehandlung unterzogen werden können.

Das erfindungsgemäße Verfahren liefert (Co)Polymerisate mit deutlich höheren Schüttdichten als die nach den bekannten Gasphasenwirbelschichtverfahren erreichbaren. Bei einer vorgegebenen Geometrie des Gasphasenwirbelschichtreaktors erlaubt das erfindungsgemäße Verfahren eine Erhöhung der Masse des Schüttgutbettes, woraus längere Verweilzeiten des Ziegler-Katalysators im Gasphasenwirbelschichtreaktor und damit eine deutliche Verbesserung der Katalysatorproduktivität resultieren. Außerdem ermöglicht die höhere Schüttdichte der in erfindungsgemäßer Verfahrensweise erhaltenen (Co)Polymerisate einen technisch einfacheren Produktaustrag als dies bei den bekannten Gasphasenwirbelschichtverfahren der Fall ist: Aufwendige Austragsschleusen sind nicht mehr notwendig,

sondern die (Co)Polymerisate können durch einfaches Öffnen und Schließen eines Kugelhahns unmittelbar in einen Austrags- oder Entspannungsbehälter gegen niedrigen atmosphärischen Überdruck entspannen, ohne daß hierbei ein hoher Gasanteil, welcher in der Folge abgetrennt, mit hohem Energieaufwand komprimiert und dem Gasphasenwirbelschichtreaktor wieder zugeführt werden müßte, als Ballast anfällt. Dadurch verringert sich auch der Aufwand bei der Entgasung der Copolymerisate gemäß der EP-A-0 341 540.

Beispiele und Vergleichsversuche

Beispiele 1 bis 7 und Vergleichsversuche V1 bis V4

Die Herstellung von Ethylenhomopolymerisaten und -copolymerisaten nach dem erfindungsgemäßen Verfahren (Beispiele 1 bis 7) und nach einem bekannten Gasphasenwirbelschichtverfahren (Vergleichsversuche V1 bis V4)

Versuchsvorschrift:

Für die (Co)Polymerisationsreaktionen der Beispiele 1 bis 7 und der Vergleichsbeispiele V1 bis V4 wurde ein Gasphasenwirbelschichtreaktor verwendet, dessen Reaktionszone einen Durchmesser von 0,5 m und eine Höhe von 4 m aufwies. Die Beruhigungszone am oberen Ende des Gasphasenwirbelschichtreaktors wies einen Durchmesser von 1 m und eine Höhe von 3 m auf.

Die (Co)Polymerisationsreaktionen wurden bei einem Druck von 20 bar durchgeführt. Die Geschwindigkeit des im Kreis geführten Reaktorgases (gemessen als Leerrohrgeschwindigkeit) lag bei allen Beispielen und Vergleichsversuchen bei 0,7 m/s. Sowohl bei den Beispielen 1 bis 7 als auch bei den Vergleichsversuchen V1 bis V4 wurde der Ziegler-Katalysator gemäß Beispiel 1 der EP-A-0 341 539 verwendet. Das molare Verhältnis dieses Ziegler-Katalysators zu dem Cokatalysator Triisobutylaluminium lag bei allen Beispielen und Vergleichsversuchen bei 1:20. Die Tabelle 2 gibt einen Überblick über die Zusammensetzung des jeweils verwendeten Reaktionsgases, die Temperatur $T_R$, bei welcher die (Co)Polymerisation im durchmischten Schüttgutbett durchgeführt wurde, die Produktivität des Katalysators sowie die Dichte, den Schmelzflußindex (MFI), die Schüttdichte und den Feingutanteil der hergestellten (Co)Polymerisate.

Der Vergleich der Werte der Beispiele 1 bis 7 mit denjenigen der Vergleichsversuche V1 bis V4 macht deutlich, daß das erfindungsgemäße Verfahren mit guten Ausbeuten Ethylenhomopolymerisate und -copolymerisate breit variierbarer Dichte liefert, welche allesamt eine höhere Schüttdichte und einen deutlich geringeren Feingutanteil aufweisen als die Ethylencopolymerisate der Vergleichsversuche V1 bis V4. Hervorzuheben ist außerdem, daß die in erfindungsgemäßer Verfahrensweise hergestellten Ethylenhomopolymerisate und Copolymerisate im Gegensatz zu den in bekannter Weise hergestellten keinen Feinstgutanteil mehr aufweisen.

Tabelle 2: Die Herstellung von (Co)Polymerisaten nach dem erfindungsgemäßen Verfahren (Beispiele 1 bis 7) und nach einem bekannten Gasphasenwirbelschichtverfahren (Vergleichsversuche V1 bis V4)

| Beispiel Nr. | Zusammensetzung des Reaktorgases (Vol.-%) | | | | | Produktivität | $T_R$ | Eigenschaften des (Co)Polymerisats | | | | |
|---|---|---|---|---|---|---|---|---|---|---|---|---|
| | $C_2H_4$ | $C_4H_8$ | $C_6H_{12}$ | $H_2$ | Inertgas[a)] | (g/g)[b)] | (°C) | d[c)] | Schüttdichte[d)] | Feingut[e)] | Feinstgut[f)] | MFI[g)] |
| | | | | | | | | (g/cm³) | (g/l) | (%) | (%) | |
| 1 | 60 | - | - | 15,0 | 25 | 4500 | 120 | 0,964 | 480 | 7,9 | - | 8,5 |
| 2 | 58 | 2 | - | 15,0 | 25 | 5500 | 115 | 0,951 | 450 | 6,4 | - | 8,0 |
| 3 | 52 | - | 4,5 | 8,5 | 35 | 5500 | 105 | 0,934 | 440 | 5,1 | | 1,0 |
| 4 | 44,5 | - | 4,5 | 6,0 | 45 | 4500 | 100 | 0,928 | 440 | 6,0 | - | 1,0 |
| 5 | 33 | 12 | - | 20,0 | 35 | 3800 | 95 | 0,923 | 420 | 4,2 | - | 23,0 |
| 6 | 33,2 | - | 5,3 | 6,5 | 55 | 4000 | 95 | 0,920 | 460 | 5,4 | - | 1,0 |
| 7 | 26 | 17 | - | 7,0 | 50 | 4500 | 75 | 0,900 | 450 | 4,3 | - | 1,0 |
| Vergl. Vers. | | | | | | | | | | | | |
| V1 | 52 | 5 | - | 13,0 | 30 | 5000 | 99 | 0,940 | 360 | 18,2 | 1,4 | 1,6 |
| V2 | 33 | 10 | - | 22,0 | 35 | 3200 | 85 | 0,923 | 350 | 15,4 | 0,6 | 23,0 |
| V3 | 39 | 15 | - | 6,0 | 40 | 4500 | 85 | 0,920 | 360 | 16,8 | 0,9 | 1,0 |
| V4 | 32 | 20 | - | 12,0 | 35 | 5000 | 60 | 0,900 | 340 | 13,2 | 0,3 | 1,0 |

a) Summe aus $N_2$, Ethan und Butan oder Hexan;

b) g (Co)Polymerisat pro g Katalysator;

c) Dichte, bestimmt nach DIN 53479;

d) bestimmt nach DIN 43468;

e) Anteil des (Co)Polymerisats mit einer Korngröße < 0,5 mm;

f) Anteil des (Co)Polymerisats mit einer Korngröße < 0,1 mm;

g) Schmelzflußindex bei 190°C und einer Auflagekraft von 2,16 kp, bestimmt nach DIN 53735;

## Patentansprüche

1. Kontinuierliches Gasphasenwirbelschichtverfahren zur Herstellung von Ethylenhomopolymerisaten und -copolymerisaten einer Dichte d von 0,87 bis 0,97 g/cm$^3$, bei welchem man Ethylen oder Gemische aus Ethylen und $C_3$- bis $C_8$-$\alpha$-Monoolefinen in der Polymerisationszone eines Gasphasenwirbelschichtreaktors bei Drücken von 1 bis 100 bar, Temperaturen $T_R$ von 30 bis 125°C und einem Inertgasanteil von 25 - 55 Vol.-% in der Gasphase in einem durchmischten Schüttgutbett aus kleinteiligem Polymerisat in Anwesenheit eines titan- und magnesiumhaltigen Ziegler-Katalysators (co)polymerisiert, die hierbei entstehende Polymerisationswärme durch Kühlung des im Kreis geführten Reaktorgases abführt und das resultierende (Co)Polymerisat aus dem Gasphasenwirbelschichtreaktor ausschleust, dadurch gekennzeichnet, daß man zur Herstellung eines (Co)Polymerisats eier vorgewählten Dichte d die (Co)Polymerisation bei einer Temperatur $T_R$ durchführt, welche in einem Bereich liegt, der von einer oberen Umhüllenden der Gleichung I

$$T_{RH} = 170 + \frac{6d'}{0,84 - d'} \qquad (I)$$

und einer unteren Umhüllenden der Gleichung II

$$T_{RN} = 173 + \frac{7,3d'}{0,837 - d'} \qquad (II),$$

worin die Variablen die folgende Bedeutung haben:

$T_{RH}$ höchste Reaktionstemperatur in °C;
$T_{RN}$ niedrigste Reaktionstemperatur in °C;
d' Zahlenwert der Dichte d des herzustellenden (Co)Polymerisats;

begrenzt wird.

2. Das Verfahren nach Anspruch 1, dadurch gekennzeichnet, daß man hierbei einen Ziegler-Katalysator mit einer titan- und magnesiumhaltigen Aktivkomponente verwendet, bei deren Herstellung ein Polysiloxan angewandt worden ist.

3. Das Verfahren nach Anspruch 2, dadurch gekennzeichnet, daß die Aktivkomponente aus einer titan- und magnesiumhaltigen Verbindung, einem Polysiloxan, einem inerten feinteiligen Trägermaterial, einer Aluminiumalkylverbindung und einer Lewis-Base hergestellt worden ist.

## Claims

1. A continuous gas-phase fluidized-bed process for the preparation of ethylene homopolymers and copolymers having a density d of from 0.87 to 0.97 g/cm$^3$, in which ethylene or a mixture of ethylene and $C_3$-$C_8$-$\alpha$ monoolefins is (co)polymerized in the polymerization zone of a gas-phase fluidized-bed reactor and from 1 bis 100 bar, temperatures °C of from 30 to 125 and an inert gas content of 25-55% by volume in the gas phase in an agitated bed of finely divided polymer in the presence of a titanium- and magnesium-containing Ziegler catalyst, the heat of polymerization evolved is removed by cooling the circulated reactor gas and the resulting (co)polymer is discharged from the gas-phase fluidized-bed reactor, wherein, for the preparation of a copolymer having a preselected density d, the (co)polymerization is carried out at a temperature $T_R$ which is in the range defined by an upper envelope having the equation I

$$T_{RH} = 170 + \frac{6d'}{0.84 - d'} \qquad (I)$$

and a lower envelope having the equation II

$$T_{RN} = 173 + \frac{7.3d'}{0.837 - d'} \qquad (II),$$

where

$T_{RH}$ is the maximum reaction temperature in °C,
$T_{RN}$ is the minimum reaction temperature in °C, and
d' is the numerical value of the density d of the (co)polymer to be prepared.

2. A process as claimed in claim 1, wherein a Ziegler catalyst having a titanium- and magnesium-containing active component prepared using a polysiloxane is employed.

3. A process as claimed in claim 2, wherein the active component has been prepared from a titanium- and magnesium-containing compound, a polysiloxane, an inert finely divided carrier, as alkylaluminum compound and a Lewis base.

**Revendications**

1. Procédé continu à couche fluidisée en phase gazeuse de préparation d'homopolymères et de copolymères de l'éthylène, d'une masse volumique de 0,87 à 0,97 g/cm$^3$, conformément auquel on (co)polymérise l'éthylène, ou des mélanges de l'éthylène et d'α-monooléfines en $C_3$ à $C_8$, dans la zone de polymérisation d'un réacteur à couche fluidisée en phase gazeuse, sous des pressions de 1 à 100 bars, à des températures $T_R$ de 30 à 125°C et une fraction de gaz inerte de 25-55% en volume dans la phase gazeuse d'un lit pulvérulent intimement mélangé, constitué de polymère finement divisé, en présence d'un catalyseur de Ziegler contenant du titane et du magnésium, on évacue la chaleur de polymérisation ainsi engendrée par refroidissement du gaz du réacteur recyclé en cycle fermé et on expulse le (co)polymère qui en résulte du réacteur à couche fluidisée en phase gazeuse, caractérisé en ce qu'en vue de la préparation d'un (co)polymère d'une masse volumique d choisie au préalable, on entreprend la (co)polymérisation à une température $T_R$, qui se situe dans une plage limitée par une enveloppante supérieure de l'équation I :

$$T_{RH} = 170 + \frac{6d'}{0,84 - d'} \qquad (I)$$

et une enveloppante inférieure de l'équation II :

$$T_{RN} = 173 + \frac{7,3d'}{0,837 - d'} \qquad (II)$$

où les diverses variables ont les significations suivantes :

$T_{RH}$ température réactionnelle la plus élevée en °C;
$T_{RN}$ Température réactionnelle la plus basse en °C;
d' indice numérique de la masse volumique d du (co)polymère à préparer.

2. Procédé suivant la revendication 1, caractérisé en ce que l'on utilise ici un catalyseur de Ziegler avec un composant actif contenant du titane et du magnésium en vue de la préparation duquel on a utilisé un polysiloxanne.

3. Procédé suivant la revendication 2, caractérisé en ce que l'on a préparé le composant actif à partir d'un composé contenant du titane et du magnésium, d'un polysiloxanne, d'un matériau de support finement divisé et inerte, d'un composé d'alkylaluminium et d'une base de Lewis.